# FASCICULE DE BREVET EUROPEEN

(11) **EP 1 959 722 B1**
(45) Date de publication et mention de la délivrance du brevet: **13.04.2016**
(21) Numéro de dépôt: 06842047.0
(22) Date de dépôt: 27.11.2006
(51) Int. Cl.: A01B 49/06

(54) **COMBINÉ DE SEMIS**
BESTELLKOMBINATION
COMBINED SOWING MACHINE

(30) Priorité: 28.11.2005 FR 0553622
(43) Date de publication de la demande: 27.08.2008
(73) Titulaire: KUHN S.A., 67706 Saverne Cedex (FR)
(72) Inventeur: KIRCH, Michel, F-67260 Keskastel (FR)
(86) Numéro de dépôt international: PCT/FR2006/051236
(87) Numéro de publication internationale: WO 2007/060377

(56) Documents cités:
- DE-A1- 19 540 932
- DE-A1- 19 733 210
- DE-A1- 19 833 674
- FR-A- 2 034 125
- FR-A- 2 696 070

## Description

La présente invention se rapporte au domaine technique général des machines agricoles destinées aux opérations de travail du sol et de semis. Elle concerne une machine combinée de grande largeur constituée d'une machine de travail du sol avec un cadre et d'un semoir, ladite machine combinée est destinée à être reliée à un tracteur par l'intermédiaire d'un système d'attelage et à s'appuyer au sol au moyen d'un chariot équipé de roues.

Il existe dans l'état de la technique une telle machine combinée de grande largeur avec une machine de travail du sol et un semoir. Cette machine combinée est destinée à être reliée à un tracteur par l'intermédiaire d'un système d'attelage et elle s'appuie sur le sol au moyen d'un chariot équipé de roues. Le chariot est lié au système d'attelage par l'intermédiaire d'une structure de liaison. Cette structure de liaison est destinée à porter la machine de travail du sol et à la dégager du sol pour les manoeuvres. La machine de travail du sol de grande largeur présente deux parties qui sont destinées à être relevées à la verticale pour le transport. Cette machine de travail du sol est accrochée sous la structure de liaison au moyen de son cadre. Le cadre est lié, à l'avant, à la structure de liaison par l'intermédiaire d'un attelage 3 points et à l'arrière par deux vérins destinés à soulever la machine de travail du sol pour les manoeuvres en bout de champ.

Afin de permettre un dégagement suffisant en hauteur pour la machine de travail du sol, la structure de liaison est relativement haute. Cette structure de liaison est dimensionnée de manière à supporter le poids de la machine de travail du sol, elle est donc imposante et lourde.

Une telle machine est aussi connue de DE 197 35 210.

Une autre machine combinée de ce type est également connue par le document DE 198 33 674**.** Cette machine combinée dispose également d'une structure de liaison reliant le chariot au système d'attelage. La structure de liaison est conçue pour porter la machine de travail du sol. La machine de travail du sol via son cadre est suspendue sous la structure de liaison. Pour réduire la hauteur de la structure de liaison et augmenter la hauteur de dégagement, la machine de travail du sol est notamment équipée d'un cadre spécifique et d'une cinématique particulière pour la liaison du cadre de la machine de travail du sol à la structure de liaison. Un vérin hydraulique commande le passage de la position de travail à la position de transport et inversement de la machine de travail du sol. Grâce à l'articulation entre le bras porteur et la bielle oscillante, on obtient un dégagement plus important vers le haut de la machine de travail du sol. En sus, de cette cinématique pour soulever la machine de travail du sol, un quadrilatère assure le guidage de la machine de travail du sol via son cadre pour être sensiblement parallèle au sol. Avec cette cinématique, la hauteur de dégagement de la machine de travail du sol est augmentée mais est toujours tributaire de la structure de liaison.

On constate que la cinématique reliant la machine de travail du sol à la structure de liaison est particulièrement complexe et que l'emploi d'un cadre spécifique pour la machine de travail du sol augmente considérablement le coût d'une telle machine combinée de grande largeur. D'autre part l'utilisation soit de la machine de travail du sol soit du semoir en solo n'est pas possible sans prévoir des adaptations spécifiques pour un attelage au tracteur.

La présente invention a pour but de remédier aux inconvénients précités et de proposer une machine combinée telle que décrite dans l'introduction dont la réalisation est simplifiée, et dont la hauteur de dégagement hors du sol de la machine de travail du sol n'est pas limitée.

A cet effet, une importante caractéristique de l'invention consiste en ce que ledit chariot est relié audit système d'attelage au moyen d'un premier dispositif de liaison, dudit cadre de ladite machine de travail du sol et d'un deuxième dispositif de liaison, ledit premier dispositif de liaison est constitué d'un quadrilatère articulé avec un premier bras supérieur et un premier bras inférieur. La construction de la machine combinée est donc relativement simple. Grâce au pilotage synchronisé du premier et du deuxième dispositifs de liaison, la machine de travail du sol est dégagée du sol verticalement et sensiblement parallèlement au sol.

D'autres caractéristiques et avantages ressortiront des revendications et de la description ci-après d'un exemple de réalisation non limitatif de l'invention avec référence aux dessins annexés dans lesquels :
- la **figure 1** représente une vue isométrique d'une machine combinée selon l'invention,
- la **figure 2** est une vue latérale de la machine combinée dans une configuration particulière,
- la **figure 3** illustre plus en détail une partie de la machine combinée dans une configuration de travail,
- la **figure 4** illustre plus en détail une partie de la machine combinée de la figure 3.

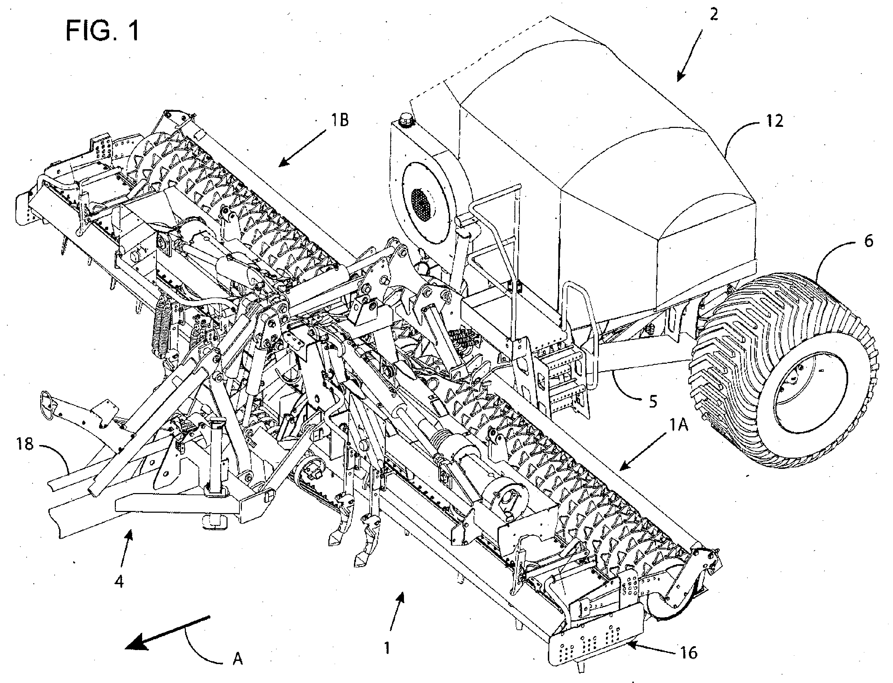

Selon l'exemple de réalisation illustrée à la figure 1, la machine combinée de travail du sol et de semis selon l'invention est une machine de grande largeur. Ce combiné de semis est constitué par la combinaison d'une machine de travail du sol (1) et d'un semoir (2). Le semoir (2) permet l'implantation de la semence dans le sol tandis que la machine de travail du sol (1) réalise une préparation du lit de semence via des organes de travail du sol. La préparation du lit de semence et la mise en terre de la semence sont donc réalisées simultanément et en un seul passage. Le combiné de semis de l'invention est destiné à être relié à un tracteur (3) qui sert à animer le combiné de semis et à le déplacer dans une direction d'avance indiquée par la flèche (A) au travail comme au transport par l'intermédiaire d'un système d'attelage (4). Dans la suite de la description, les notions "avant" et "arrière", "devant" et "derrière" sont définies par rapport au sens d'avance (A) et les notions "droite" et "gauche" sont définies en regardant la machine de l'arrière dans ledit sens d'avance (A).

La machine combinée de l'invention est un combiné de semis de grande largeur qui s'appuie sur le sol au moyen d'un chariot (5) équipé de roues (6). Le combiné de semis présente une largeur de travail qui avoisine les 6 mètres. La machine de travail du sol (1) et le semoir (2) sont réalisés en au moins deux parties (1A, 1B ; 2A, 2B) qui peuvent être déplacées de manière à ce que le combiné de semis respecte la législation réglementant la circulation sur la voie publique. Actuellement en France, cette législation limite notamment la largeur à 3 mètres et la hauteur à 4 mètres. En position de travail, les deux parties (1A, 1B) de la machine de travail du sol (1) s'étendent transversalement à la direction d'avance (A) de part et d'autre d'un plan vertical médian de la machine combinée. Le semoir (2) présente également deux parties s'étendant transversalement à la direction d'avance (A) dans le prolongement à l'arrière des parties (1A, 1B). Chaque partie (1A, 1B) présente sensiblement une largeur de 3 mètres.

En position de transport, les parties (1A, 1B) sont pivotées autour d'une articulation respective d'une position sensiblement horizontale de travail à une position sensiblement verticale de transport au moyen d'organes de manoeuvre, par exemple des vérins. Les articulations respectives sont positionnées de manière à ce que, en position de transport, les parties (1A, 1B) ne dépassent pas la largeur autorisée pour circuler sur la voie publique. Un tel repliage pour la position de transport est connu de l'homme de l'art, il ne sera donc pas décrit davantage. Les parties du semoir (2) ne sont pas représentées sur la figure 1.

La machine de travail du sol (1) s'étend à l'avant du semoir (2) dans une direction transversalement à la direction d'avance (A). Elle comporte un cadre (7) qui est destiné à porter les deux parties (1A, 1B) de la machine de travail du sol (1). Le cadre (7) est lié au système d'attelage (4) au moyen d'un premier dispositif de liaison (8). Le premier dispositif de liaison (8) comporte, en vue latérale, un quadrilatère déformable verticalement. Le quadrilatère déformable est un parallélogramme. Le premier dispositif de liaison (8) se compose d'un premier bras supérieur (9) et d'un premier bras inférieur (10). Lesdits premiers bras (9, 10) sont liés d'une part au cadre (7) et d'autre part au système d'attelage (4) au moyen d'articulations respectives d'axes respectifs sensiblement perpendiculaires à la direction d'avance (A). D'une manière avantageuse, le cadre (7) de la machine de travail du sol (1) est équipé d'un attelage 3 points disposant d'un point supérieur et de deux points inférieurs. Ainsi le premier dispositif de liaison (8) comporte un premier bras supérieur (9) et deux premiers bras inférieurs (10).

Le cadre (7) de la machine de travail du sol (1) est encore lié au chariot (5) par l'intermédiaire d'un deuxième dispositif de liaison (11). Le chariot (5) est ainsi relié au système d'attelage (4) au moyen du premier dispositif de liaison (8), du cadre (7) de la machine de travail du sol (1) et du deuxième dispositif de liaison (11). Le chariot (5) est destiné à recevoir une trémie (12) à la base de laquelle est situé un dispositif de dosage (non représenté) permettant de doser la semence en provenance de la trémie (12). Le chariot (5) porte également à l'arrière, un dispositif d'implantation de la semence (13) dans le sol et un dispositif de soufflerie (non représenté) débitant un flux d'air pour véhiculer la semence de la trémie (12) jusqu'au dispositif d'implantation de la semence (13). Le semoir (2) est donc composé du chariot (5) avec la trémie (12) et le dispositif d'implantation de la semence (13) dans le sol. Selon l'exemple de réalisation, le semoir (2) est du type pneumatique. Les tuyaux d'acheminement de la semence de la trémie (12) au dispositif d'implantation (13) ainsi que la tête de distribution ne sont pas représentés sur les différentes figures.

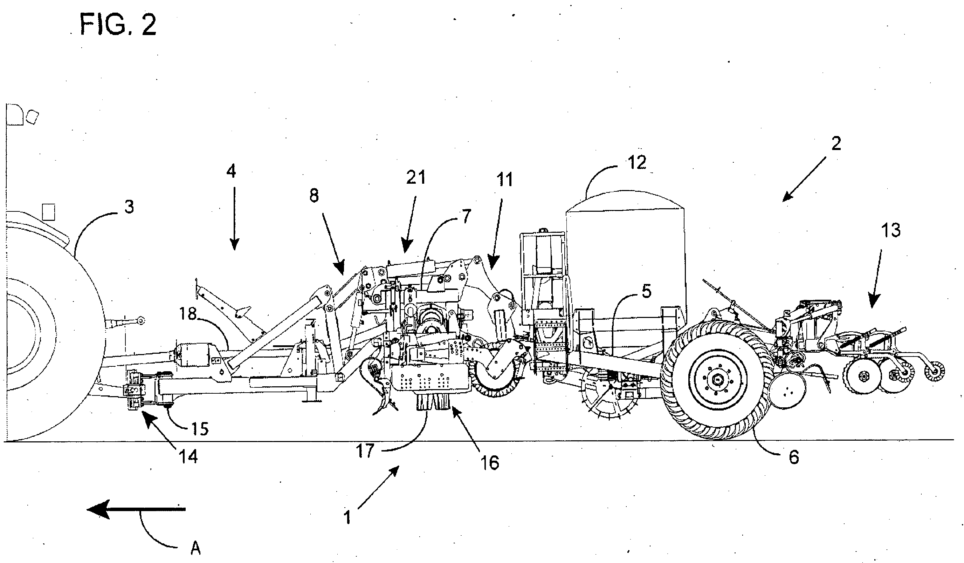

Dans l'exemple de réalisation représenté à la figure 2, le système d'attelage (4) est destiné à être accouplé aux deux points d'attelage inférieurs (14) de l'attelage trois points du tracteur (3). Dans ce cas, le système d'attelage (4) dispose d'une articulation (15) d'axe sensiblement vertical permettant de limiter la surface d'évolution de la machine combinée en bout de champ. Grâce à cette articulation verticale (15), les manoeuvres nécessaires pour réaligner le combiné de semis avec le tracteur (3) en bout de champ sont limitées. Dans un autre exemple de réalisation non représenté, le combiné de semis est attelé directement sur le piton du tracteur (3). Avec un accrochage sur le piton, une articulation verticale (15) n'est pas nécessaire sur le système d'attelage.

La figure 2 représenté le combiné de semis dans une configuration dite de manoeuvre. On remarque que dans cette configuration de manoeuvre, la machine de travail du sol (1) ainsi que le dispositif d'implantation (13) sont dégagés du sol. Cette configuration permet les manoeuvres en bout de champ en dégageant simplement la machine de travail du sol (1) et le semoir (2) ou plus particulièrement le dispositif d'implantation (13) du sol. Cette configuration dite de manoeuvre évite de replier les parties (1A, 1B) verticalement dans la position de transport.

De part la nature de la machine de travail du sol (1), il est important de dégager cette dernière sensiblement verticalement par rapport au sol. Dans l'exemple de réalisation, la machine de travail du sol (1) est une herse rotative (16) qui comportent des outils (17) qui sont entraînés par la prise de force du tracteur (3). Ces outils (17) sont liés, d'une manière connue de l'homme de l'art, au caisson de la herse rotative (16) via des rotors. L'entraînement des outils (17) autour d'un axe vertical respectif, s'effectue à partir de la prise de force du tracteur (3) qui entraîne par l'intermédiaire d'un arbre télescopique à joints universels (18), l'arbre d'entrée du carter central. Le carter central, disposé sur le caisson, transmet alors le mouvement de rotation aux rotors. Afin de ne pas endommager l'arbre télescopique à joints universels (18), il est important que l'arbre d'entrée du carter reste parallèle à la prise de force du tracteur (3).

Ainsi selon une importante caractéristique de l'invention, le deuxième dispositif de liaison (11) reliant le cadre (7) au semoir (2) comporte, en vue latérale, un quadrilatère déformable verticalement. Le deuxième dispositif de liaison (11) comporte, pour sa part, un deuxième bras supérieur (19) et un deuxième bras inférieur (20). Lesdits deuxièmes bras (19, 20) sont liés d'une part au cadre (7) et d'autre part au chariot (5) au moyen d'articulations respectives d'axes respectifs sensiblement perpendiculaires à la direction d'avance (A). Dans l'exemple ci-représenté, le quadrilatère déformable est avantageusement un parallélogramme. D'une manière avantageuse, le deuxième dispositif de liaison (11) comporte un deuxième bras supérieur (19) et deux deuxième bras inférieurs (20).

Pour soulever la machine de travail du sol (1) pour les manoeuvres ou pour l'abaisser pour le travail, le combiné de semis est équipé d'un module hydraulique (21). Ce module hydraulique (21) permet d'abaisser la herse rotative (16) dans sa position de travail ou de la soulever pour la position de manoeuvre. Le module hydraulique (21) déforme les parallélogrammes du premier dispositif de liaison (8) et du deuxième dispositif de liaison (11) de manière à obtenir un dégagement sensiblement vertical et parallèlement à la surface du sol de la herse rotative (16).

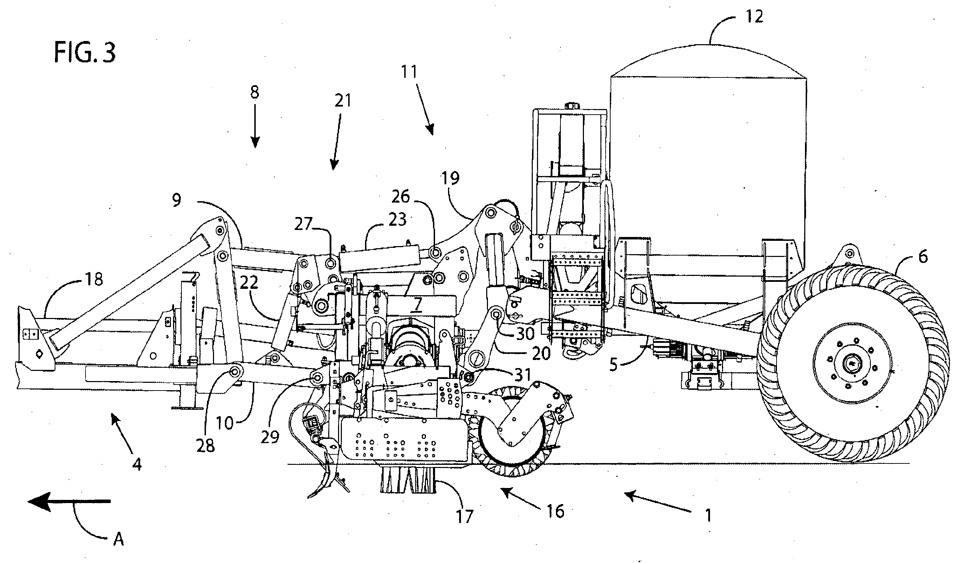

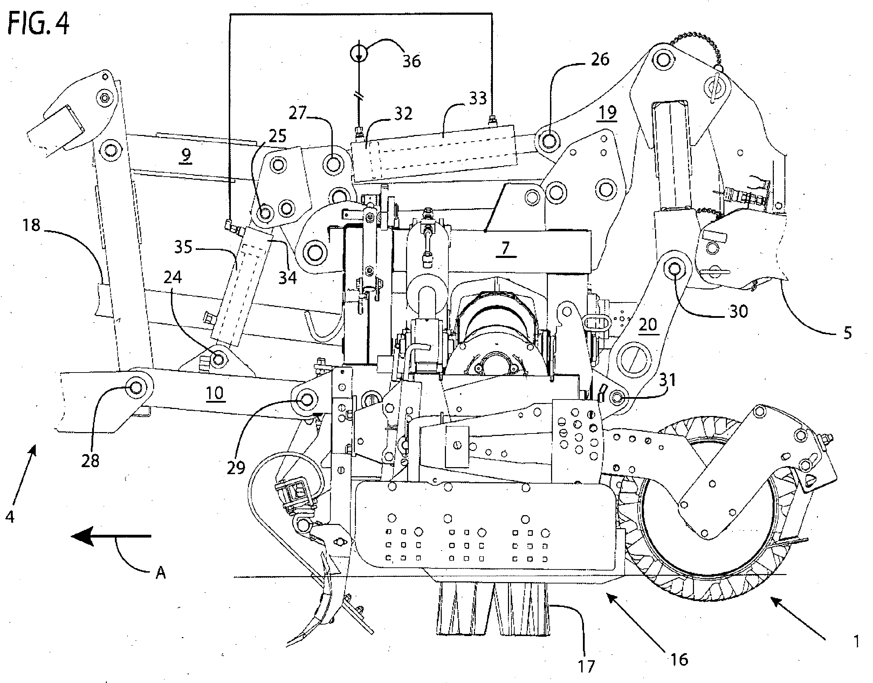

Dans l'exemple de réalisation de la figure 3, le combiné de semis est représenté dans sa configuration de travail. On remarque que dés outils (17) de la herse rotative (16) sont dans le sol. Pour passer de la configuration dite de manoeuvre (Fig. 2) à la configuration de travail (Fig. 3) et inversement, le module hydraulique (21) comporte un premier actionneur (22) destiné à agir sur le premier dispositif de liaison (8) et un deuxième actionneur (23) destiné à agir sur le deuxième dispositif de liaison (11). On remarque que dans la configuration de travail (Fig. 3), les deux actionneurs (22, 23) sont rétractés alors que dans la configuration dite de manoeuvre (Fig. 2), les deux actionneurs (22, 23) sont étendus. Le dispositif d'implantation (13) n'est pas représenté sur les figures 3 et 4. Le dégagement en hauteur de la machine de travail du sol (1) n'est pas limité par un quelconque élément de la machine combinée. Il est par contre tributaire de la course des deux actionneurs (22, 23) et de la longueur des bras (9, 10, 19, 20) du premier et du deuxième dispositifs de liaison (8, 11).

A la lumière des figures 3 et 4, le premier actionneur (22) est lié d'une part au premier bras inférieur (10) via une première articulation (24) d'axe horizontal et perpendiculaire à la direction d'avance (A) et d'autre part au cadre (7) via une deuxième articulation (25) d'axe horizontal et perpendiculaire à la direction d'avance (A). Le deuxième actionneur (23) est, quant à lui, lié d'une part au deuxième bras supérieur (19) via une troisième articulation (26) d'axe horizontal et perpendiculaire à la direction d'avance (A) et d'autre part au cadre (7) via une quatrième articulation (27) d'axe horizontal et perpendiculaire à la direction d'avance (A). Le premier bras inférieur (10) est lié d'une part au système d'attelage (4) au moyen d'une cinquième articulation (28) et d'autre part au cadre (7) au moyen d'une sixième articulation (29). Le deuxième bras inférieur (20) est, pour sa part, lié d'une part au chariot (5) au moyen d'une septième articulation (30) et d'autre part au cadre (7) au moyen d'une huitième articulation (31).

Dans l'exemple de réalisation, le premier actionneur (22) est constitué d'au moins un vérin hydraulique à simple effet et le deuxième actionneur (23) est, pour sa part, constitué d'un vérin hydraulique à double effet. Pour imprimer un déplacement sensiblement vertical à la herse rotative (16), le premier dispositif de liaison (8) et le deuxième dispositif de liaison (11) sont synchronisés via le module hydraulique (21). Le module hydraulique (21) est en communication avec la centrale hydraulique appartenant au tracteur (3). Le module hydraulique (21) est commandé directement par le dispositif de commande à l'intérieur du tracteur (3). L'agriculteur n'aura pas besoin d'agir sur le relevage des points d'attelage inférieurs (14) de l'attelage 3 points du tracteur (3).

Selon la figure 4, la grande chambre (32) du deuxième actionneur (23) est alimentée par le réservoir (36) de la centrale hydraulique pour dégager la herse rotative (16) du sol. La petite chambre (33) du deuxième actionneur (23) est, quant à elle, en communication avec la grande chambre (34) du premier actionneur (22). Ainsi, lorsque la grande chambre (32) du deuxième actionneur (23) est alimentée, le fluide contenu dans la petite chambre (33) est chassé dans la grande chambre (34) du premier actionneur (22). Le deuxième actionneur (23) est avantageusement un vérin du type à double effet mais ce dernier est utilisé comme un vérin simple effet. Ce faisant, les deux actionneurs (22, 23) sont en extension maximale et la herse rotative (16) est dégagée du sol (Fig. 2). La herse rotative (16) est dégagée du sol via le module hydraulique (21) parallèlement au sol et sans détériorer l'arbre télescopique à joints universels (18). Les deux actionneurs (22, 23) sont alors complètement étendus.

Pour abaisser la herse rotative (16) dans la position de travail, le fluide contenu dans la grande chambre (34) du premier actionneur (22) est chassé vers la petite chambre (33) du deuxième actionneur (23) sous l'action du poids de la herse rotative (16) et le fluide de la grande chambre (32) du deuxième actionneur (23) retourne vers le réservoir (36).

Il est important que le volume de la petite chambre (33) du deuxième actionneur (23) soit égal au volume de la grande chambre (34) du premier actionneur (22). De cette manière, la herse rotative (16), lors de la commande du deuxième actionneur (23), se dégage de manière sensiblement parallèle au sol. La sixième articulation (29) et la huitième articulation (31) impriment un déplacement vertical vers le haut de la même valeur. Dans l'exemple de réalisation représenté, le premier actionneur (22) est constitué de deux vérins à simple effet. Ces deux vérins sont dimensionnés de manière à ce que le volume de la petite chambre (33) du deuxième actionneur (23) soit égal au volume des deux grandes chambres (34).

Selon un exemple de réalisation non représenté, il est possible d'implanter sur l'orifice de la petite chambre (35) du premier actionneur (22) un accumulateur oléopneumatique qui permet de soulever quelque peu la herse rotative (16) durant le travail, c'est ce qu'on appelle faire un allégement.

Selon un autre avantage de l'invention, l'encombrement en longueur du combiné de semis dans la configuration dite de manoeuvre et pour le transport est réduit. Dans la configuration dite de manoeuvre, le premier et le deuxième actionneurs (22, 23) sont étendus de manière à dégager la machine de travail du sol (1) hors du sol. On remarque que le chariot (5) est alors plus proche du système d'attelage (4). La distance entre un plan vertical passant par la première articulation (24) et un plan vertical passant par la troisième articulation (26) est plus petite que cette distance lorsque le combiné de semis est dans sa configuration de travail (Fig. 3). Cet encombrement réduit en longueur améliore la maniabilité du combiné de semis lors du transport et des manoeuvres.

Pour limiter la largeur des fourrières, il est possible de faire travailler la machine de travail du sol (1) et le semoir (2) à des moments différents. En pratique lorsque l'agriculteur arrive dans sa parcelle, il va d'abord commander l'abaissement des deux parties de la machine de travail du sol (1) pour être sensiblement horizontale et perpendiculaire à la direction d'avance (A). Puis il va enclencher l'arbre télescopique à joints universels (18) via la prise de force du tracteur (3) qui va entraîner la rotation des outils (17) de la herse rotative (16). Il commande le module hydraulique (21) c'est-à-dire le deuxième actionneur (23) qui va amener la herse rotative (16) dans sa position de travail et commencera à avancer. Lorsque le semoir (2), c'est-à-dire le dispositif d'implantation (13), arrivera au niveau de la zone travaillée par la herse rotative (16), l'agriculteur mettra le dispositif d'implantation (13) dans le sol. Ainsi la machine combinée effectuera un semis simultanément à la préparation du lit de semence. Pour la sortie de terre en bout de champ, l'agriculteur commandera d'abord le module hydraulique (21) pour dégager la herse rotative (16) du sol, puis commandera le dégagement du dispositif d'implantation (13). L'entrée et la sortie de terre se font de manière progressive ce qui limite la largeur des fourrières. L'agriculteur n'aura pas besoin d'agir sur le relevage des points d'attelage inférieurs (14) de l'attelage 3 points du tracteur (3) pendant l'utilisation de la machine combinée.

Dans l'exemple de réalisation des figures, la machine de travail du sol (1) est équipée en sus de la herse rotative (16), à l'avant d'une lame de nivellement et d'effaceurs de traces, et à l'arrière d'un rouleau de rappuyage. Ces équipements s'étendent sensiblement sous le cadre (7) et transversalement par rapport à la direction d'avance (A). Le rouleau de rappuyage définit la profondeur de travail des outils (17) de la herse rotative (16).

Avec la machine combinée de l'invention, la préparation du lit de semence et l'introduction de la semence dans le sol sont effectuées de manière simultanée lors d'un unique passage sur la parcelle. Le débit des chantiers est augmenté car le nombre de passages successifs sur la parcelle pour la réalisation des différentes opérations est réduit. Cette réduction entraîne donc un gain de temps, une économie de carburant et une réduction des tassements indésirables du sol par les roues du tracteur. Dans des terres humides à l'automne, les conditions ne sont pas toujours favorables pour l'utilisation d'une telle machine combinée. Grâce au premier et au deuxième dispositifs de liaison (8, 11), l'agriculteur peut adapter la machine combinée en fonction de ses besoins. Il pourra utiliser la machine de travail du sol (1) indépendamment du semoir (2). A cet effet, il désaccouplera le deuxième dispositif de liaison (11) puis le premier dispositif de liaison (8) et accouplera directement la machine de travail du sol (1) à l'attelage 3 points du tracteur (3). Ainsi, il effectuera la préparation du lit de semence lors d'un premier passage et l'opération de semis sera effectuée dans un second passage lorsque la terre sera ressuyée. Le semis pourra alors être réalisé à grande vitesse. Pour le semis, l'agriculteur accouplera le système d'attelage (4) avec le premier dispositif de liaison (8) au semoir (2).

Il est encore possible que le semoir (2) de l'invention présente un dispositif d'implantation (13) en trois parties. Dans ce cas, le dispositif d'implantation (13) présente une partie centrale et une partie latérale de chaque côté de la partie centrale. Pour le transport, ce sont uniquement les parties latérales qui sont alors repliées vers le haut. Un tel semoir en trois parties étant connu de l'homme du métier, il ne sera pas décrit davantage.

Il est bien évident que l'invention n'est pas limitée aux modes de réalisation décrit ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection.

## Revendications

1. Machine combinée de grande largeur constituée d'une machine de travail du sol (1) avec un cadre (7), d'un système d'attelage (4) et d'un semoir (2), ladite machine combinée est destinée à être reliée à un tracteur (3) par l'intermédiaire du système d'attelage (4) et à s'appuyer au sol au moyen d'un chariot (5) équipé de roues *(6),* ***caractérisée par le fait* que** ledit chariot (5) est relié audit système d'attelage (4) au moyen d'un premier dispositif de liaison (8), dudit cadre (7) de ladite machine de travail du sol (1) et d'un deuxième dispositif de liaison (11), ledit premier dispositif de liaison (8) est constitué d'un quadrilatère articulé avec un premier bras supérieur (9) et un premier bras inférieur (10).

2. Machine selon la revendication 1, ***caractérisée par le fait* que** ladite machine de travail du sol (1) est dégagée du sol au moyen dudit premier dispositif de liaison (8) et dudit deuxième dispositif de liaison (11).

3. Machine selon la revendication 1 ou 2, ***caractérisée par le fait* que** ledit deuxième dispositif de liaison (11) est constitué d'un quadrilatère articulé avec un deuxième bras supérieur (19) et un deuxième bras inférieur (20).

4. Machine selon l'une quelconque des revendications 1 à 3, ***caractérisée par le fait* que** ledit premier dispositif de liaison (8) et ledit deuxième dispositif de liaison (11) présentent chacun un bras supérieur (9, 19) et deux bras inférieurs (10, 20).

5. Machine selon l'une quelconque des revendications 1 à 4, ***caractérisée par le fait* que** ledit premier dispositif de liaison (8) et ledit deuxième dispositif de liaison (11) sont constitués d'un quadrilatère déformable notamment un parallélogramme respectif.

6. Machine selon l'une quelconque des revendications 1 à 5, ***caractérisée par le fait* que** ledit premier dispositif de liaison (8) et ledit deuxième dispositif de liaison (11) sont pilotés de manière synchrone via un module hydraulique (21).

7. Machine selon la revendication 6, ***caractérisée par le fait* que** ledit module hydraulique (21) comporte un premier actionneur (22) avec une grande chambre (34) et une petite chambre (35) agissant sur ledit premier dispositif de liaison (8) et un deuxième actionneur (23) avec une grande chambre (32) et une petite chambre (33) agissant sur ledit deuxième dispositif de liaison (11).

8. Machine selon la revendication 7, ***caractérisée par le fait* que** ledit premier actionneur (22) est lié audit premier bras inférieur (10) au moyen d'une première articulation (24) et audit cadre (7) au moyen d'une deuxième articulation (25) et que ledit deuxième actionneur (23) est lié audit deuxième bras supérieur (19) au moyen d'une troisième articulation (26) et au cadre (7) au moyen d'une quatrième articulation (27).

9. Machine selon la revendication 7, ***caractérisée par le fait* que** ladite grande chambre (34) du premier actionneur (22) est en communication avec la petite chambre (33) du deuxième actionneur (23).

10. Machine selon la revendication 7 ou 9, ***caractérisée par le fait* que** le volume de la petite chambre (33) du deuxième actionneur (23) est égal au volume de ladite grande chambre (34) du premier actionneur (22).

## Patentansprüche

1. Breite Kombination, die aus einer Bodenbearbeitungsmaschine (1) mit einem Rahmen (7), einem Kupplungssystem (4) und einer Sämaschine (2) gebildet ist, die Kombination ist dazu vorgesehen mit einem Traktor (3) mittels des Kupplungssystems (4) verbunden zu werden und sich mittels eines mit Räder (6) versehenen Wagens (5) auf dem Boden abzustützen, ***dadurch gekennzeichnet*, dass** der Wagen (5) mittels einer ersten Verbindungsvorrichtung (8), des Rahmens (7) der Bodenbearbeitungsmaschine (1) und einer zweiten Verbindungsvorrichtung (11) mit dem Kupplungssystem (4) verbunden ist, die erste Verbindungsvorrichtung (8) ist aus einem angelenkten Viereck mit einem ersten oberen Arm (9) und einem ersten unteren Arm (10) gebildet.

2. Maschine nach Anspruch 1, ***dadurch gekennzeichnet*, dass** die Bodenbearbeitungsmaschine (1) mittels der ersten Verbindungsvorrichtung (8) und der zweiten Verbindungsvorrichtung (11) vom dem Boden gehoben wird.

3. Maschine nach Anspruch 1 oder 2, ***dadurch gekennzeichnet*, dass** die zweite Verbindungsvorrichtung (11) aus einem angelenkten Viereck mit einem zweiten oberen Arm (19) und einem zweiten unteren Arm (20) gebildet ist.

4. Maschine nach irgend einem der Ansprüche 1 bis 3, ***dadurch gekennzeichnet*, dass** die erste Verbindungsvorrichtung (8) und die zweite Verbindungsvorrichtung (11) jeweils ein oberer Arm (9, 19) und zwei untere Arme (10, 20) aufweisen.

5. Maschine nach irgend einem der Ansprüche 1 bis 4, ***dadurch gekennzeichnet*, dass** die erste Verbindungsvorrichtung (8) und die zweite Verbindungsvorrichtung (11) aus einem verformbaren Viereck, insbesonders einem jeweiligen Parallelogramm, gebildet sind.

6. Maschine nach irgend einem der Ansprüche 1 bis 5, ***dadurch gekennzeichnet*, dass** die erste Verbindungsvorrichtung (8) und die zweite Verbindungsvorrichtung (11) synchronweise mittels eines Hydraulikmoduls (21) gesteuert sind.

7. Maschine nach Anspruch 6, ***dadurch gekennzeichnet,* dass** das Hydraulikmodul (21) ein erstes auf die erste Verbindungsvorrichtung (8) einwirkendes Betätigungselement (22) mit einer grossen Kammer (34) und einer kleinen Kammer (35) und ein zweites auf die zweite Verbindungsvorrichtung (11) einwirkendes Betätigungselement (23) mit einer grossen Kammer (32) und einer kleinen Kammer (33) aufweist.

8. Maschine nach Anspruch 7, ***dadurch gekennzeichnet*, dass** das erste Betätigungselement (22) mit dem ersten unteren Arm (10) mittels eines ersten Gelenks (24) und mit dem Rahmen (7) mittels eines zweiten Gelenks (25) verbunden ist und, dass das zweite Betätigungselement (23) mit dem zweiten oberen Arm (19) mittels eines dritten Gelenks (26) und mit dem Rahmen (7) mittels eines vierten Gelenks (27) verbunden ist.

9. Maschine nach Anspruch 7, ***dadurch gekennzeichnet*, dass** die grosse Kammer (34) des ersten Bestätigungselements (22) mit der kleinen Kammer (33) des zweiten Betätigungselements (23) verbunden ist.

10. Maschine nach Anspruch 7 oder 9, ***dadurch gekennzeichnet,* dass** das Volumen der kleinen Kammer (33) des zweiten Betätigungselements (23) dem Volumen der grossen Kammer (34) des ersten Betätigungselements (22) gleich ist.

## Claims

1. Wide combined machine consisting of a soil-working machine (1) with a frame (7), a hitching system (4) and a seeder (2), the said combined machine is intended to be connected to a tractor (3) by means of the hitching system (4) and to rest on the ground by means of a carriage (5) equipped with wheels *(6),* ***characterized in* that** the said carriage (5) is connected to the said hitching system (4) by means of a first connecting device (8), of the said frame (7) of the said soil-working machine (1), and of a second connecting device (11), the said first connecting device (8) consists of an articulated quadrilateral with a first upper arm (9) and a first lower arm (10).

2. Machine according to claim 1, ***characterized in* that** the said soil-working machine (1) is held clear of the ground by means of the said first connecting device (8) and of the said second connecting device (11).

3. Machine according to claim 1 or 2, ***characterized in* that** the said second connecting device (11) consists of an articulated quadrilateral with a second upper arm (19) and a second lower arm (20).

4. Machine according to any one of claims 1 to 3, ***characterized in* that** the said first connecting device (8) and the said second connecting device (11) each have an upper arm (9, 19) and two lower arms (10, 20).

5. Machine according to any one of claims 1 to 4, ***characterized in* that** the said first connecting device (8) and the said second connecting device (11) consist of a deformable quadrilateral, in particular a respective parallelogram.

6. Machine according to any one of claims 1 to 5, ***characterized in* that** the said first connecting device (8) and the said second connecting device (11) are operated synchronously via a hydraulic module (21).

7. Machine according to claim 6, ***characterized in* that** the said hydraulic module (21) comprises a first actuator (22) with a large chamber (34) and a small chamber (35) acting on the said first connecting device (8) and a second actuator (23) with a large chamber (32) and a small chamber (33) acting on the said second connecting device (11).

8. Machine according to claim 7, ***characterized in* that** the said first actuator (22) is connected to the said first lower arm (10) by means of a first articulation (24) and to the said frame (7) by means of a second articulation (25), and **in that** the said second actuator (23) is connected to the said second upper arm (19) by means of a third articulation (26) and to the frame (7) by means of a fourth articulation (27).

9. Machine according to claim 7, ***characterized in* that** the said large chamber (34) of the first actuator (22) is in communication with the small chamber (33) of the second actuator (23).

10. Machine according to claim 7 or 9, ***characterized in* that** the volume of the small chamber (33) of the second actuator (23) is equal to the volume of the said large chamber (34) of the first actuator (22).
